# EUROPÄISCHE PATENTSCHRIFT

(11) **EP 0 823 342 B1**
(45) Veröffentlichungstag und Bekanntmachung des Hinweises auf die Patenterteilung: **15.10.2003**
(21) Anmeldenummer: 97112578.6
(22) Anmeldetag: 22.07.1997
(51) Int. Cl.: B60D 1/02

(54) **Anhängerkupplung**
Trailer coupling
Attelage de remorque

(30) Priorität: 31.07.1996 DE 19630897
(43) Veröffentlichungstag der Anmeldung: 11.02.1998
(73) Patentinhaber: Hunger, Walter, Dr.-Ing. E.h., D-97074 Würzburg (DE)
(72) Erfinder: Hunger, Walter, Dr.-Ing. E.h., D-97074 Würzburg (DE)
(74) Vertreter: Witte, Alexander, Dr.-Ing.

(56) Entgegenhaltungen:
- DE-A- 3 726 823
- DE-U- 9 405 462
- FR-A- 2 094 325
- GB-A- 889 503
- US-A- 1 923 904

## Beschreibung

Die Erfindung betrifft eine Anhängerkupplung nach dem Oberbegriff des Anspruchs 1.

Die Erfindung betrifft ferner eine Anhängerkupplung nach dem Oberbegriff des Anspruchs 5.

Gattungsgemäße Anhängerkupplungen der vorstehend genannten Art sind z.B. aus der DE-U-94 05 462 bekannt.

Bei herkömmlichen Anhängerkupplungen zwischen einem Zugfahrzeug und einem Anhänger muß vor dem Ankuppeln des Anhängers der Kupplungsbolzen aus seiner abgesenkten, das Kupplungsmaul durchsetzenden Stellung in seine angehobene Lösestellung verbracht werden. Dies geschieht bei herkömmlichen Anhängerkupplungen dadurch, daß der Fahrer des Zugfahrzeuges einen entsprechenden Hebel betätigt.

Sobald die Zugöse an der Deichsel des Anhängers mit ihrem vorderen Ende in das Kupplungsmaul eingefahren wurde, wird über eine Entriegelvorrichtung der Kupplungsbolzen aus der Lösestellung wieder freigegeben und schnellt nach unten, wobei er durch die Öffnung in der Zugöse hindurchgreift und auf diese Weise eine formschlüssige und gelenkige Verbindung zwischen Zugfahrzeug und Anhänger herstellt.

Bei manchen Zugfahrzeugen ist die Anhängerkupplung relativ weit unten, d.h. in relativ geringem Abstand über der Fahrbahn angeordnet. Hinzu kommt, daß in diesen Fällen die Anhängerkupplung häufig unterhalb von Teilen des Aufbaus angeordnet ist, die nach hinten auskragen.

In derartigen Fällen ist es schwierig, die Anhängerkupplung manuell zu betätigen.

Bei einigen bekannten Anordnungen werden spazierstockartige Vorrichtungen verwendet, um die Anhängerkupplung aus einer gewissen Entfernung unterhalb des Fahrzeuges betätigen zu können. Die Handhabung dieser langen Kurbeln und dergleichen ist jedoch relativ umständlich.

Es sind weiterhin Anhängerkupplungen bekannt geworden, bei denen die Betätigung des Kupplungsbolzens über einen Bowdenzug vorgenommen wird. Derartige Bowdenzüge erfordern jedoch aufgrund ihrer inneren Reibung erhöhte Betätigungskräfte. Dies gilt insbesondere dann, wenn die Bowdenzüge lange Zeit im Einsatz sind und während des Einsatzes verschmutzen oder im Winter gar einfrieren.

Aus einem Prospektblatt "Hunger-Mobilhydraulik" ist weiterhin eine vollhydraulische Anhängerkupplung bekannt geworden, bei der die gesamte Betätigung des Kupplungsbolzens über eine Hydraulik vorgenommen wird. Bei entsprechender Leitungslänge kann man die Kupplung daher aus großen Entfernungen und ohne manuellen Kraftaufwand fernsteuern.

Auf der anderen Seite besteht ein Interesse an Betätigungsvorrichtungen für herkömmlich ausgebildete Anhängerkupplungen, bei denen die Hubbewegung des Kupplungsbolzens von einer Verschwenkbewegung einer Welle abgeleitet wird, die mittels eines radialen Handhebels verdreht wird. Derartige Betätigungsvorrichtungen sollen an herkömmliche Anhängerkupplungen ansetzbar sein, ohne daß in den Aufbau der Anhängerkupplung im übrigen eingegriffen wird.

Aus dem eingangs genannten DE-U-94 05 462 ist eine solche Betätigungsvorrichtung für eine ansonsten herkömmliche Anhängerkupplung bekannt. Bei dieser bekannten Vorrichtung wird der Kupplungsbolzen über einen um eine horizontale Achse drehbaren Hebel vertikal verfahren. Hierzu ist der Kupplungsbolzen mit einem seitlich vorstehenden Zapfen versehen, der in eine Kulissenführung an einem Ende des Hebels eingreift. Der Hebel wird wiederum mittels eines zweiten Hebels verdreht, der ebenfalls um eine horizontale Achse verschwenkbar ist. Zu diesem Zweck ist der zweite Hebel drehstarr mit einem Ritzel verbunden. Das Ritzel kämmt seinerseits mit einer Zahnstange, die mittels einer Kolben-Zylinder-Anordnung linear verfahrbar ist. Wenn die Kolben-Zylinder-Anordnung hydraulisch angesteuert wird, wird die Zahnstange linear verschoben, das Ritzel dreht sich und verschwenkt den zweiten Hebel. Der zweite Hebel verschwenkt seinerseits den ersten Hebel, der über den seitlichen Zapfen am Kupplungsbolzen diesen in vertikaler Richtung verfährt.

Bei der bekannten Vorrichtung ist das Zahnrad ferner mit einem Freilauf versehen. Hierdurch kann erreicht werden, daß dann, wenn der Kupplungsbolzen in der beschriebenen Weise nach oben in seine Lösestellung verfahren und dort verrastet wurde, der zweite Hebel und damit auch die Kolben-Zylinder-Einrichtung wieder in ihre Ausgangsstellung zurückfahren können, indem der Kraftfluß zwischen dem zweiten Hebel und dem ersten Hebel aufgehoben wird.

Durch diese Auftrennung des Kraftflusses soll möglicherweise erreicht werden, daß der Kupplungsbolzen jederzeit beim Einfahren einer Zugöse nach unten schnellen kann, ohne dabei infolge einer starren Antriebsverbindung zur Kolben-Zylinder-Anordnung durch deren hydraulische Zeitkonstante gebremst zu werden.

Die bekannte Vorrichtung ist jedoch mit Nachteilen behaftet.

Ein erster Nachteil besteht darin, daß die Anordnung mit mehreren Hebeln kompliziert aufgebaut ist und daher nur in beschränktem Umfange, wenn überhaupt, als echte Zusatzeinrichtung für herkömmliche Anhängerkupplungen brauchbar ist. Außerdem ist die komplizierte Anordnung mit hohen Fertigungskosten verbunden. Dies gilt insbesondere dann, wenn ein Zahnrad mit einem integrierten Freilauf verwendet wird, weil ein solcher Freilauf ein relativ aufwendiges und damit teures Bauteil ist. Schließlich ist bei der bekannten Vorrichtung nur in eingeschränktem Maße gewährleistet, daß der Kupplungsbolzen in seiner unteren Stellung, d.h. der Schließstellung, verbleibt.

Der Erfindung liegt demgegenüber die Aufgabe zugrunde, Anhängerkupplungen der eingangs genannten Art dahingehend weiterzubilden, daß die genannten Nachteile vermieden werden. Insbesondere soll der Aufbau der Anhängerkupplung, insbesondere der Betätigungsvorrichtung, drastisch vereinfacht werden, um den Fertigungsaufwand und damit die Kosten zu senken. Gleichzeitig soll die Zuverlässigkeit der Anordnung erhöht werden.

Bei einer ersten erfindungsgemäßen Ausführungsform einer Anhängerkupplung der eingangs zunächst genannten Art wird diese Aufgabe erfindungsgemäß durch die Merkmale des Anspruchs 1 gelöst.

Die der Erfindung zugrunde liegende Aufgabe wird auf diese Weise vollkommen gelöst. Bei Verwendung eines Drehantriebes der beschriebenen Art entsteht nämlich ein integrierter, d.h. extrem kompakter, zuverlässiger und betriebssicherer Aufbau, der in einfacher Weise zu fertigen ist und damit nur niedrige Betriebskosten zur Folge hat. Die Anordnung ist ferner so getroffen, daß sie an beliebige existierende Anhängerkupplungen herkömmlicher Art angeflanscht werden kann, so daß ein Produkt entsteht, daß als Sonderausstattung oder dergleichen beim Verkauf einer Anhängerkupplung angeboten werden kann.

Bei einer bevorzugten Weiterbildung der Erfindung ist der Kolben stirnseitig mit einer Ausnehmung versehen, und der Mitnehmernocken greift in diese Ausnehmung.

Diese Maßnahme hat den Vorteil, daß der Mitnehmernocken sicher geführt ist und daß Platz gespart wird, weil der Abschnitt, in dem sich die Ausnehmung befindet, sowohl zur linearen Führung des Kolbens als auch zur Verdrehung des Mitnehmernockens dient.

Eine besonders bevorzugte Weiterbildung dieses Ausführungsbeispiels besteht darin, daß die Ausnehmung eine radiale Anlagefläche aufweist, und daß der Mitnehmernocken mit einem balligen Abschnitt an der Anlagefläche anliegt.

Diese Maßnahme hat den Vorteil, daß die Übertragung der Linearbewegung in die Drehbewegung besonders verlustarm geschieht, weil nur ein balliger Abschnitt an einer Anlagefläche anliegt. Aufgrund dessen kann die Anordnung auch nicht verklemmen oder zu sonstigen Störungen führen.

Weiterhin ist noch eine Variante dieser Erfindung bevorzugt, bei der die Rückstellfeder parallel zur Achse des Kolbens angeordnet ist.

Auch diese Maßnahme hat den Vorteil, daß sich eine besonders raumsparende Konstruktion ergibt, weil die Rückstellfeder über ihre axiale Länge zumindest teilweise in den Kolben integriert werden kann.

Insgesamt steht damit eine Anhängerkupplung zur Verfügung, bei der die hydraulisch erzeugte Linearbewegung in besonders einfacher, kompakter und zuverlässiger Weise in eine Drehbewegung umgesetzt wird. Da der Kolben nur lose am Mitnehmernocken anliegt, kann sich der Kolben nach Erreichen der Lösestellung wieder zurückziehen, insbesondere unter der Wirkung der erwähnten Rückstellfeder. Damit kann der Kupplungsbolzen jederzeit aus der Lösestellung in die Schließstellung herabschnellen, ohne während dieser notwendigerweise schnell ablaufenden Bewegung durch Zeitkonstanten der Hydraulik gebremst zu werden.

Bei einer zweiten erfindungsgemäßen Ausführungsform einer Anhängerkupplung der eingangs als zweites genannten Art, wird diese Aufgabe erfindungsgemäß durch die Merkmale des Anspruchs 5 gelöst.

Die der Erfindung zugrunde liegende Aufgabe wird auch auf diese Weise vollkommen gelöst.

Die Dreh-Mitnahmeverbindung mit toter Zone gewährleistet nämlich, daß einerseits die hydraulisch erzeugte Linearbewegung zuverlässig in die Drehbewegung umgesetzt wird. Andererseits gestattet die tote Zone ein Zurückfahren des hydraulischen Linearantriebes nach Erreichen der Lösestellung des Kupplungsbolzens, so daß auch in diesem Falle der Kupplungsbolzen jederzeit mit hoher Geschwindigkeit in die Schließstellung herabgefahren werden kann.

Bei diesem Aspekt der Erfindung macht man sich mit Vorteil die Tatsache zunutze, daß der gesamte Verfahrweg des Kupplungsbolzens von einer Drehbewegung, nämlich ursprünglich der manuell erzeugten Drehbewegung mittels eines Hebels, abgeleitet wird, wobei der Verdrehwinkel relativ klein ist. Im Gegensatz zu dem weiter vorne referierten Stand der Technik ist somit kein komplizierter Freilauf erforderlich, der nur dann notwendig ist, wenn die Freilauffunktion in einem Bereich erzeugt wird, bei der die Drehbewegung über größere Drehwinkel abläuft.

Dabei hat die Maßnahme, daß die Dreh-Mitnahmeverbindung eine in einem drehbaren Mitnehmer drehbar gelagerte Welle umfaßt, wobei die Welle einen radial vorstehenden Stein umfaßt und der Stein in einer auf einen Teil des Umfanges des Mitnehmers begrenzten Aussparung verdrehbar ist, den Vorteil, daß die Dreh-Mitnahmeverbindung mit extrem einfachen Mitteln aufgebaut wird, die darüber hinaus noch sehr zuverlässig arbeiten.

Es wurde bereits erwähnt, daß der erforderliche Drehwinkel relativ klein bemessen ist und sich an denjenigen Winkeln orientiert, die bei herkömmlichen, manuell betätigten Anhängerkupplungen durch Verdrehen des Hebels durchmessen werden. Bevorzugt sind Werte zwischen 60° und 90°, insbesondere etwa 75°.

Um die fluidisch erzeugte lineare Bewegung in eine Drehbewegung umzusetzen, können unterschiedliche Getriebearten verwendet werden. Dabei geht man davon aus, daß die fluidisch erzeugte Linearbewegung die Bewegung eines Kolbens ist.

Bei einer ersten Variante ist der Kolben mit einer Zahnstange versehen, und die Zahnstange kämmt mit einem auf einer Welle sitzenden Ritzel, wie dies an sich aus dem eingangs referierten Stand der Technik bekannt ist.

Bei einer anderen Variante der Erfindung ist der Kolben an ein Ende einer Gelenkstange angelenkt, dessen anderes Ende an das freie Ende einer auf einer Welle sitzenden Kurbel angelenkt ist.

Diese Maßnahme hat den Vorteil, daß ein einfacherer und kostengünstigerer Aufbau möglich ist, weil nur wenige Gelenkelemente und keine Verzahnung erforderlich sind. Darüber hinaus sind auch die Reibungsverluste geringer.

Ferner ist bevorzugt, wenn die Drehbewegung der Welle gegen eine Rückstellfeder abgestützt ist.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine äußerst schematisierte Gesamtansicht, von der Seite und teilweise im Schnitt, einer Anhängerkupplung der hier interessierenden Art;
- Fig. 2: eine Darstellung im Längsschnitt zur Erläuterung eines fluidischen Drehantriebes, wie er bei der Anhängerkupplung gemäß Fig. 1 verwendet wird;
- Figuren 3a und 3b: einen Radialschnitt, entlang der Linie III-III von Fig. 2, und zwar in zwei Betriebsstellungen;
- Fig. 4: eine Darstellung, ähnlich Fig. 2, jedoch für ein abgewandeltes Ausführungsbeispiel der Erfindung;
- Figuren 5a bis 5d: einen äußerst schematisierten Radialschnitt entlang der Linie V-V von Fig. 4, für vier verschiedene Betriebsstellungen;
- Fig. 6: eine weitere Darstellung im Radialschnitt, für eine erste Variante eines hydraulischen Antriebes, entlang der Linie VI-VI von Fig. 4; und
- Fig. 7: eine Darstellung, ähnlich wie diejenige der Fig. 6, jedoch für ein weiteres Ausführungsbeispiel der Erfindung, entlang der Linie VII-VII von Fig. 4.

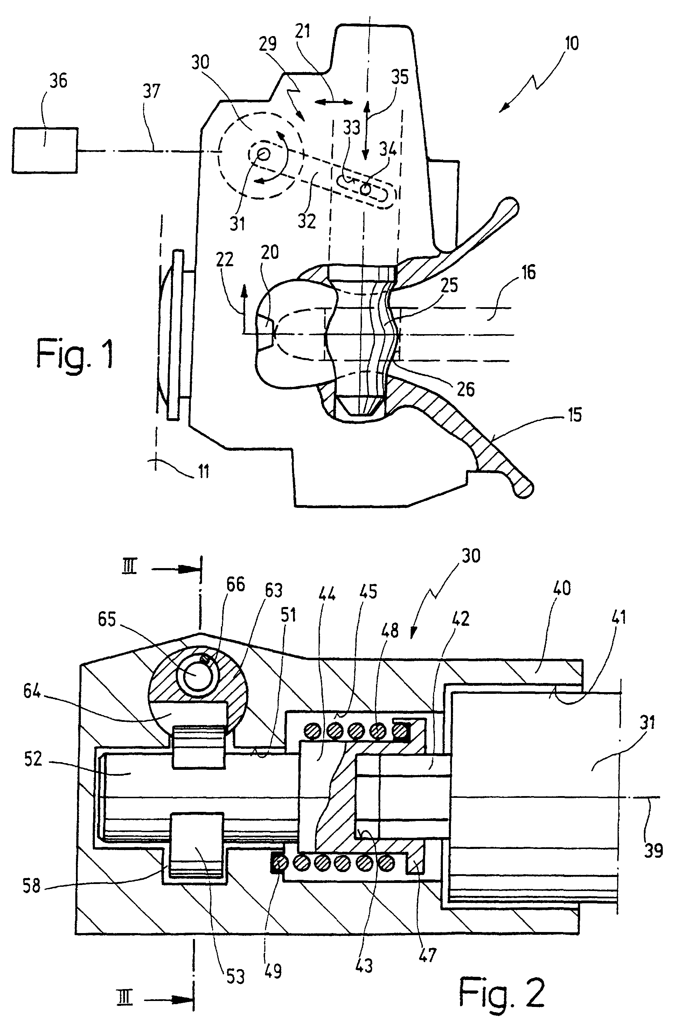

In Fig. 1 bezeichnet 10 als Ganzes eine Anhängerkupplung von an sich herkömmlicher Bauart. Die Anhängerkupplung 10 ist am Heck eines nur angedeuteten Zugfahrzeuges 11 angeordnet.

Die Anhängerkupplung 10 umfaßt ein nach hinten offenes Kupplungsmaul 15, in das eine nur schematisch angedeutete Zugöse 16 eingeführt werden kann. Wenn die Zugöse 16 in das Kupplungsmaul 15 vollständig eingeführt wurde, tritt ihr freies Ende mit einem Kontakt 20 am Grunde des Kupplungsmauls 15 in Wirkungsverbindung. Wie mit einem Pfeil 22 angedeutet, bewirkt ein Ansprechen des Kontaktes 20, daß eine bei 21 angedeutete Riegelvorrichtung gelöst wird, so daß ein Kupplungsbolzen 25 mit hoher Geschwindigkeit aus einer oberen Lösestellung in die in Fig. 1 eingezeichnete untere Schließstellung verfährt. Der Kupplungsbolzen 25 durchsetzt dabei eine Durchgangsöffnung 26 in der Zugöse 16. Der Anhänger ist nun formschlüssig und um die Hochachse des Kupplungsbolzens 25 verdrehbar mit dem Zugfahrzeug 11 verbunden.

Wenn die Verbindung zwischen Anhänger und Zugfahrzeug 11 nach Beendigung der Fahrt wieder gelöst werden soll, muß der Kupplungsbolzen 25 wieder nach oben verfahren werden. Hierzu dient eine insgesamt mit 29 angedeutete Betätigungsvorrichtung. Die Betätigungsvorrichtung 29 umfaßt einen fluidischen Drehantrieb 30, insbesondere einen hydraulischen Antrieb mit einer Welle 31.

Über die Welle 31 wird ein Drehhebel 32 um eine horizontale Achse verschwenkt. Der Drehhebel 32 trägt an seinem freien Ende eine Kulisse, beispielsweise ein Langloch 33. Im Langloch 33 läuft ein Stift 34, der seitlich radial und in horizontaler Richtung vom Kupplungsbolzen 25 absteht. Es ist leicht einsehbar, daß bei einer Verdrehung der Welle 31 der Kupplungsbolzen 25 in Richtung des Pfeils 35 in Vertikalrichtung verfahren wird.

Der fluidische Drehantrieb 30 wird von einer Druckquelle 36 über eine Leitung 37 versorgt. Die Druckquelle 36 kann eine Hydraulikpumpe, ein Verdränger oder ein sonstwie geeignetes Aggregat sein.

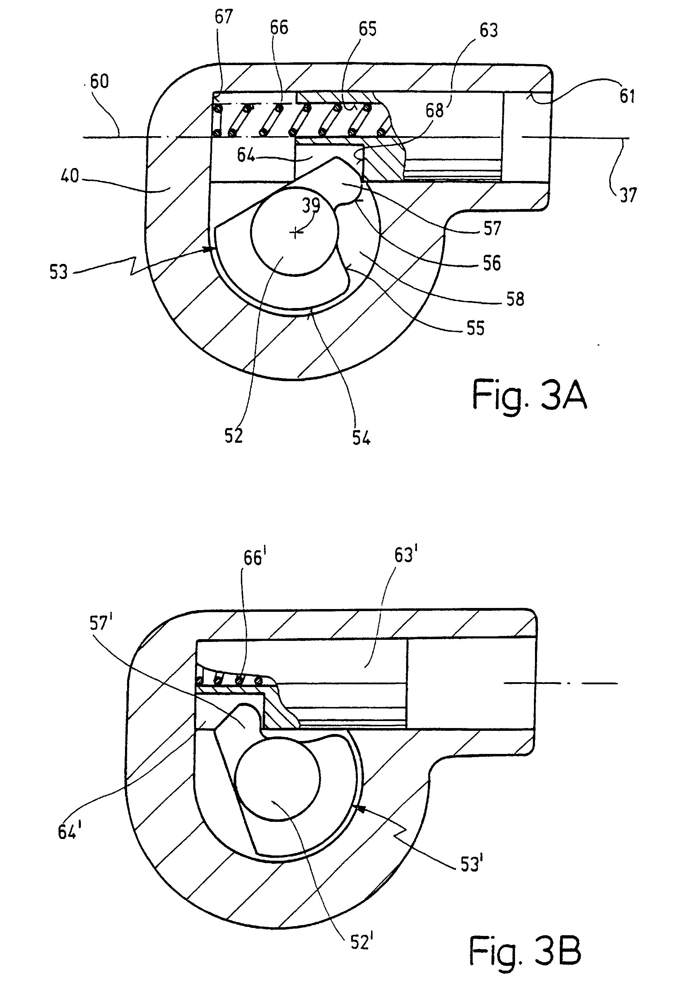

Die Figuren 2 sowie 3a und 3b zeigen weitere Einzelheiten des fluidischen Drehantriebes 30.

Am rechten Rand von Fig. 2 erkennt man die Welle 31, die z.B. vom Hersteller einer herkömmlichen, manuell betätigbaren Anhängerkupplung als Schnittstelle vorgegeben ist. Die Welle 31 definiert eine horizontale, erste Achse 39.

In einem Gehäuse 40 ist eine Stufenbohrung 41 vorgesehen, die an ihrem rechten Ende die Welle 31 lagert. An ihrem in Fig. 2 linken Ende ist die Welle 31 mit einem Sechskantzapfen 42 oder einem anderen Unrundzapfen versehen, der in eine dazu komplementäre Sechskantbohrung 43 eines Mitnehmers 44 eingreift. Dies geschieht einfach dadurch, daß der Sechskantzapfen 42 von rechts in die Sechskantbohrung 43 eingeschoben wird. Die Verbindung kann damit jederzeit in axialer Richtung gelöst werden. In Umfangsrichtung besteht jedoch eine drehstarre Mitnahmeverbindung.

Der Mitnehmer 44 läuft in einem mittleren Abschnitt 45 der Stufenbohrung 41.

Der Mitnehmer 44 ist an seinem in Fig. 2 rechten Rand mit einem radial vorstehenden Flansch 47 versehen. Der Flansch 47 dient zum Halten einer zusätzlichen Schraubenfeder 48, die um den Mitnehmer 44 herum angeordnet ist. Bei dem dargestellten Ausführungsbeispiel ist das rechte obere Ende der Schraubenfeder 48 im Flansch 47 gehalten. Das linke untere Ende der Schraubenfeder 48 befindet sich hingegen fest in einer Ausnehmung 49 des Gehäuses 40.

Die zusätzliche Schraubenfeder 48 ist damit im Bereich des Mitnehmers 44 in das Gehäuse 40 integriert. Sie ist so angeordnet, daß sie auf die Welle 31 ein Drehmoment ausübt, wenn sich der Kupplungsbolzen 25 in der in Fig. 1 gezeigten Schließstellung befindet. Auf diese Weise wird der Kupplungsbolzen 25 mit hoher Kraft in dieser Schließstellung gehalten. Zum Anheben des Kupplungsbolzens 25 muß daher das Drehmoment der Schraubenfeder 48 überdrückt werden.

In einem linken Abschnitt 51 der Stufenbohrung 41, der sich an den mittleren Abschnitt 45 anschließt, läuft ein Wellenstummel 52. Der Wellenstummel 52 trägt etwa auf halber axialer Länge eine Nockenscheibe 53.

Wie man besonders gut aus den Figuren 3a und 3b erkennen kann, umfaßt die Nockenscheibe 53 einen über etwa 90° Umfangswinkel durchgehenden zylindrischen Umfangsabschnitt 54, eine sich daran anschließende Aussparung 55 sowie einen sich wiederum daran anschließenden balligen Abschnitt 56 eines radial vorstehenden Mitnehmernockens 57. Aus Fig. 2 erkennt man, daß die Nockenscheibe 53 sich in einem Ringraum 58 dreht, der radial vom linken Abschnitt 51 der Stufenbohrung 41 abgeht.

Eine zweite Achse 60 verläuft im wesentlichen unter einem rechten Winkel zur ersten Achse 39. Entlang der zweiten Achse 60 erstreckt sich, wie aus Fig. 3a entnehmbar, eine Zylinderbohrung 61. In der Zylinderbohrung 61 läuft ein Kolben 63. Der Kolben 63 ist an seiner Unterseite mit einer Ausnehmung 64 versehen, die an ihrem in Fig. 3a rechten Ende eine radiale Anlagefläche 68 hat.

Der Kolben 63 ist ferner mit einer Längsbohrung 65 versehen, in der sich eine Schraubenfeder 66 befindet. Die Schraubenfeder 66 stützt sich an ihrem linken Ende an einer radialen Stirnwand 67 der Zylinderbohrung 61 ab.

Die Wirkungsweise der Anordnung gemäß Fig. 2, 3a und 3b ist wie folgt:

In der Schließstellung der Anhängerkupplung 10 befindet sich die Anordnung in der in Fig. 3a dargestellten Ausgangsstellung. Der Kolben 63 befindet sich in seiner rechten Endstellung. Die Schraubenfeder 66 ist entspannt. Die Nockenscheibe 53 befindet sich ebenfalls in ihrer in Fig. 3a eingezeichneten Stellung. In dieser Stellung liegt der ballige Abschnitt 56 des Mitnehmernockens 57 am unteren Rand der Anlagefläche 68 an.

Wenn nun die Anhängerkupplung 10 gelöst, d.h. der Kupplungsbolzen 25 nach oben verfahren werden soll, wird über die Leitung 37 hydraulischer Druck in die Zylinderbohrung 61 und damit auf die rechte Stirnfläche des Kolbens 63 gegeben. Der Kolben 63 bewegt sich nun aus der Darstellung gemäß Fig. 3a nach links. Dabei nimmt die Anlagefläche 68 über den balligen Abschnitt 56 den Mitnehmernocken 57 nach links mit. Auf diese Weise wird die Nockenscheibe 53 in Fig. 3 im Gegenuhrzeigersinn verdreht. Die Nockenscheibe 53 nimmt den mit ihr starr verbundenen Wellenstummel 52 mit. Über den Wellenstummel 52 wird auch der damit starr verbundene Mitnehmer 44 verdreht.

Dies bewirkt zum einen, daß die zusätzliche Schraubenfeder 48, die bislang den Kupplungsbolzen 25 in der unteren Schließstellung gehalten hatte, überdrückt wird. Die Drehung des Mitnehmers 44 bewirkt ferner, daß über die Sechskantbohrung 43 auch der Sechskantzapfen 42 und damit die Welle 31 mitgenommen wird. Infolge dessen bewegt sich der Kupplungsbolzen 25 nach oben.

Die Drehung der Welle 31 verläuft über einen Drehwinkel im Bereich zwischen 60° und 90° und liegt vorzugsweise bei etwa 75°. Da dieser Drehwinkel unmittelbar auf den Wellenstummel 52 übertragen wird, braucht sich auch die Nockenscheibe 53 nur um die beispielsweise 75° zu verdrehen. Dies wiederum erfordert nur einen relativ geringen Verfahrweg des Kolbens 63, wie man durch Vergleich der Figuren 3a und 3b leicht erkennt. In Fig. 3b sind dieselben Bezugszeichen wie in Fig. 3a verwendet, bewegte Elemente sind lediglich durch Hinzufügen eines Apostroph gekennzeichnet.

Wenn der Kupplungsbolzen 25 die obere Endstellung, d.h. die Lösestellung, erreicht hat, wird die Riegelvorrichtung 21 aktiviert, die den Kupplungsbolzen 25 in der Lösestellung arretiert, und zwar gegen die Kraft der nunmehr voll gespannten zusätzlichen Schraubenfeder 48.

Da der Lösevorgang damit abgeschlossen ist, wird der hydraulische Druck in der Leitung 37 wieder vermindert, so daß nunmehr auch der Kolben 63 auf seiner rechten Stirnfläche nicht mehr belastet ist.

Dies bewirkt, daß der Kolben 63 unter der Wirkung der als Rückstellfeder wirkenden Schraubenfeder 66 wieder nach rechts in die in Fig. 3a dargestellte Ausgangsstellung zurückfährt. Da der Kupplungsbolzen 25, wie erwähnt, in der Lösestellung verrastet ist, bleibt jedoch die Nockenscheibe 53 in der Stellung 53' gemäß Fig. 3b stehen. Dies ist deswegen möglich, weil der Kolben 63 und die Nockenscheibe 53 im Bereich 56/68 nur lose aneinanderliegen, so daß der Kolben 63 in seine Ausgangsstellung zurückkehren kann, ohne die Nockenscheibe 53 mitnehmen zu müssen.

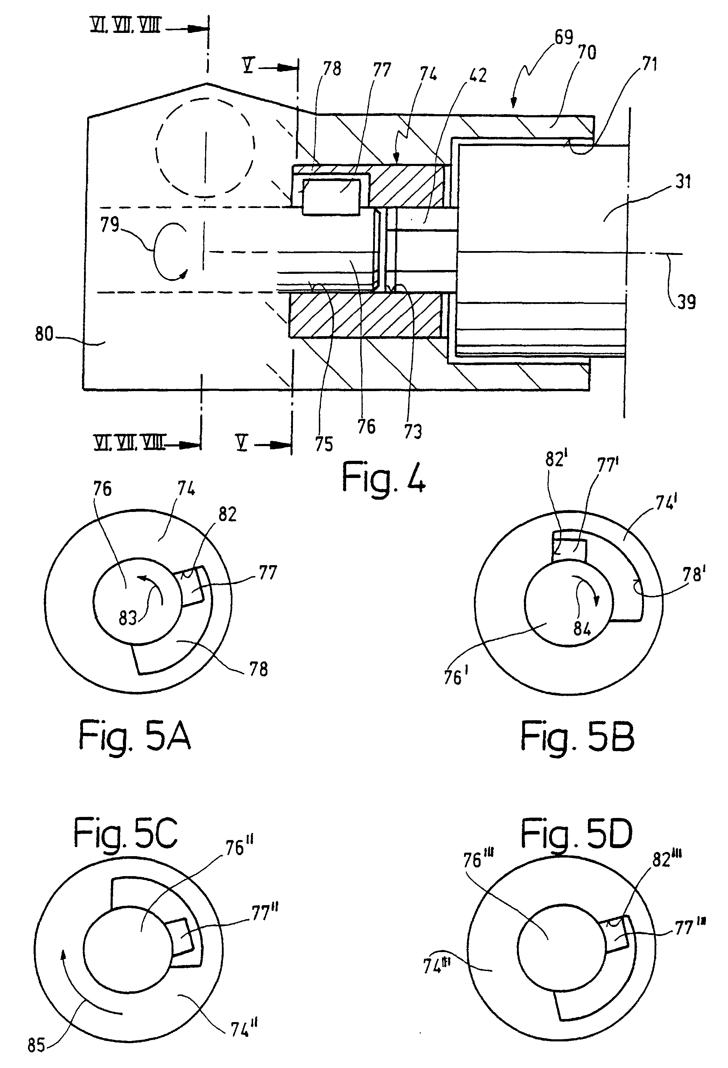

Bei dem in Fig. 4 dargestellten weiteren Ausführungsbeispiel umfaßt ein Drehantrieb 69 ein Gehäuse 70 mit einer Stufenbohrung 71. Dieselbe Welle 31 mit Sechskantzapfen 42 kann in die Stufenbohrung 71 bzw. eine Sechskantbohrung 73 eines Mitnehmers 74 eingesteckt werden, wie dies bereits beschrieben wurde.

Der Mitnehmer 74 umfaßt in Abweichung vom Mitnehmer 44 gemäß Fig. 2 an seiner linken Seite eine Zylinderbohrung 75, in der ein Wellenstummel 76 frei drehbar gelagert ist. Der Wellenstummel 76 ist jedoch mit einem radialen Mitnehmerstein 77 versehen. Der Mitnehmerstein 77 greift in eine Aussparung 78 im Mitnehmer 74. Die Aussparung 78 verläuft um den Wellenstummel 76 herum, und zwar über etwa 90° des Umfanges, wie man deutlich aus den Figuren 5a bis 5d erkennen kann. Da der Mitnehmerstein 77 eine endliche Breite hat, ist sein Verschwenkwinkel und damit der Verschwenkwinkel des Wellenstummels 76, auf beispielsweise 75° begrenzt.

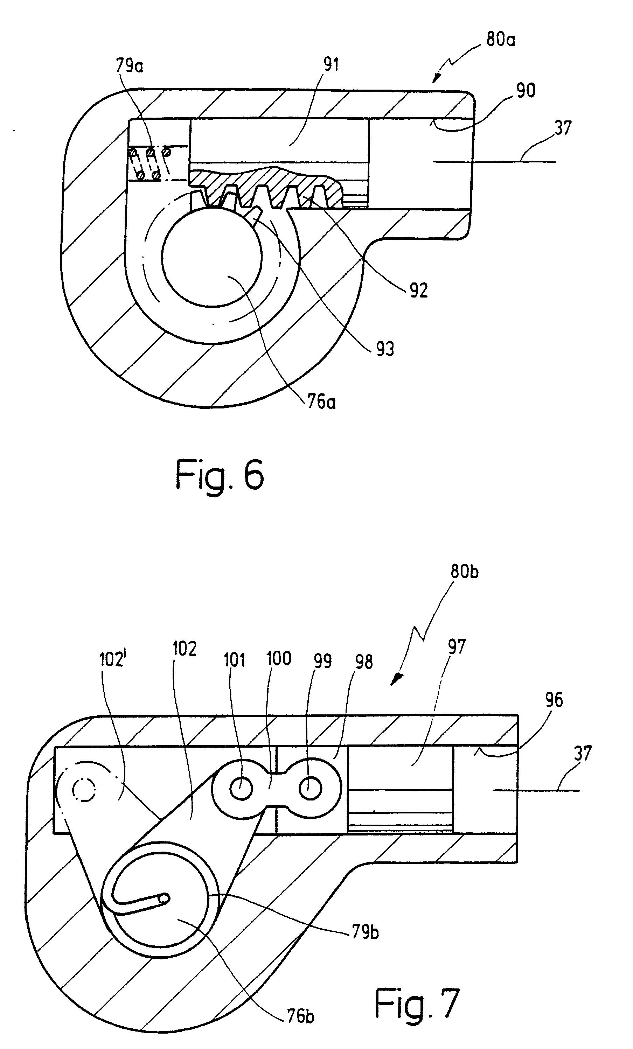

Der Wellenstummel 76 wird seinerseits von einem hydraulischen Antrieb 80 angetrieben, der in Fig. 4 nur angedeutet ist und in drei Varianten weiter unten anhand der Figuren 6 bis 8 noch erläutert werden soll. Es ist bereits hier mit 79 eine Rückstellfeder angedeutet, die auf eine Drehbewegung des Wellenstummels 76 einwirkt.

Die Wirkungsweise der Anordnung gemäß Fig. 4 soll anhand der Figuren 5a bis 5d nun näher erläutert werden:
Fig. 5a zeigt eine Ausgangsstellung, in der der Mitnehmerstein 77 an einer Stirnseite der Ausnehmung 78 anliegt.

Wenn nun der Wellenstummel 76 in Gegenuhrzeigerrichtung verdreht wird, wie mit einem Pfeil 83 in Fig. 5a angedeutet, wird der Mitnehmer 74 durch den sich mit drehenden Mitnehmerstein 77 ebenfalls mit gedreht. Nach beispielsweise 75° Drehung in Gegenuhrzeigerrichtung ist die zweite Stellung gemäß Fig. 5b ereicht. Dies ist die Stellung, in der der Kupplungsbolzen 25 seine obere Lösestellung erreicht hat und dort verriegelt wurde. Der Kupplungsbolzen 25 ist auch hier über die drehstarre Verbindung der Sechskante 42, 73 drehstarr mit dem Mitnehmer 74 verbunden. Der Mitnehmer 74 verharrt daher zunächst in der in Fig. 5b dargestellten zweiten Stellung 74'.

Wenn nun der hydraulische Antrieb 80 wiederum entlastet wird, kann der Wellenstummel aus der in Fig. 5b dargestellten zweiten Stellung 76' wieder zurückkehren, wie mit einem Pfeil 84 in Fig. 5b dargestellt.

Wenn dies geschieht, wird die dritte Stellung gemäß Fig. 5c erreicht. Der Wellenstummel 76'' bzw. der Mitnehmerstein 77' befinden sich nun geometrisch wieder in der Ausgangsstellung gemäß Fig. 5a. Der Mitnehmer 74'' verharrt hingegen noch in der Stellung, die er bereits in Fig. 5b eingenommen hatte.

Wenn nun ein Kupplungsvorgang durchgeführt wird und der Kupplungsbolzen 25 nach unten schnellt, dreht sich der Mitnehmer aus der in Fig. 5c dargestellten Stellung 74'' in Uhrzeigerrichtung, wie mit einem Pfeil 85 in Fig. 5c dargestellt ist.

Als vierte Stellung ergibt sich dann eine Situation gemäß Fig. 5d, die wiederum die Ausgangsstellung entsprechend Fig. 5a für den nächsten Löse- bzw. Kupplungsvorgang ist.

Der Mitnehmerstein 77 hat somit, kinematisch gesprochen, innerhalb der in Umfangsrichtung begrenzten Aussparung 78 eine tote Zone bzw. eine Hysterese, wobei eine Mitnahme bei Umkehr der Drehrichtung jeweils erst nach Durchlaufen dieser toten Zone, d.h. der Verdrehung von beispielsweise 75° stattfinden kann.

Die Figuren 6 und 7 zeigen, wie bereits erwähnt, zwei Varianten für einen hydraulischen Antrieb 80, wie er bei dem Drehantrieb 69 gemäß Fig. 4 verwendet werden kann.

Bei der ersten Variante gemäß Fig. 6 umfaßt der hydraulische Antrieb 80a eine Zylinderbohrung 90, in der ein Kolben 91 läuft. Die Zylinderbohrung 90 ist an die Leitung 37 angeschlossen. Der Kolben 91 ist an seiner Unterseite mit einer Zahnstange 92 versehen. Die Zahnstange 92 kämmt mit einem Ritzel 93. Das Ritzel 93 sitzt drehstarr auf dem Wellenstummel 76a.

Wenn über die Leitung 37 Druck angelegt wird, verschiebt sich der Kolben 91 in der Zylinderbohrung 90. Über das Getriebe 92/93 wird der Wellenstummel 76a verdreht. Für eine Rückstellung des Kolbens 91 sorgt z.B. die Schraubenfeder 79a.

Bei der zweiten Variante gemäß Fig. 7 weist der hydraulische Antrieb 80b eine Zylinderbohrung 96 auf, in der ein Kolben 97 läuft. Der Kolben 97 ist an seinem linken Ende mit einer Aussparung 98 versehen. In der Aussparung ist an einem Punkt 99 eine Gelenkstange 100 mit einem Ende angelenkt. Die Gelenkstange 100 kann z.B. ein Kettenglied sein. Das linke Ende der Gelenkstange 100 ist an einem Punkt 101 mit dem freien Ende einer Kurbel 102 gelenkig verbunden. Die Kurbel 102 sitzt drehstarr auf dem Wellenstummel 76b.

Eine Schraubenfeder 79b ist um den Wellenstummel 76b gewickelt und übt ein Rückstellmoment in der Drehrichtung des Wellenstummels 76b aus.

Wird über die Leitung 37 Druck in die Zylinderbohrung 96 gegeben, fährt der Kolben 97 nach links. Über die gelenkige Verbindung mittels der Gelenkstange 100 wird nun die Kurbel 102 aus der in Fig. 7 durchgezogen eingezeichneten Stellung in die in Fig. 7 strichpunktiert eingezeichnete Stellung verschwenkt. Die Schraubenfeder 79b wird dabei gespannt. Wird der Druck an der Leitung 37 abgeschaltet, kehrt der Wellenstummel 76b wieder in die Ausgangsstellung zurück.

## Patentansprüche

1. Anhängerkupplung mit einem Kupplungsmaul (15), einem durch das Kupplungsmaul (15) hindurch verfahrbaren Kupplungsbolzen (25) zum Verriegeln einer in das Kupplungsmaul (15) eingesteckten Zugöse (16) und mit einer Betätigungsvorrichtung (29) für das Verfahren des Kupplungsbolzens (25), wobei die Betätigungsvorrichtung (29) einen fluidisch betriebenen Drehantrieb (30) umfaßt, in dem eine Linearbewegung eines Kolbens (63) in eine Drehbewegung einer Welle (52) umsetzbar ist, deren Drehbewegung in eine Hubbewegung des Kupplungsbolzens (25) zum Lösen der Anhängerkupplung (10) umsetzbar ist, wobei der Kupplungsbolzen (25) in der Lösestellung verrastbar ist, und wobei ferner die Antriebsverbindung zwischen dem Kolben (63) und der Welle (52) nach dem Erreichen der Lösestellung des Kupplungsbolzens (25) trennbar ist, derart, daß der Kolben (63) selbsttätig in seine Ausgangsstellung zurückkehrt, und weiterhin der Drehantrieb (30) ein Gehäuse (40) mit einer Bohrung (51) umfaßt, in der die Welle (52) läuft, und ein Ringraum (58) die Bohrung (51) umgibt, und eine Zylinderbohrung (61) im wesentlichen rechtwinklig zur Bohrung (51) angeordnet ist und den Ringraum (58) schneidet, und ferner der Kolben (63) in der Zylinderbohrung (61) läuft, und weiterhin eine Rückstellfeder (66) für den Kolben (63) vorgesehen ist, **dadurch gekennzeichnet, daß** der Ringraum (58) einen fest auf der Welle (52) sitzenden Mitnehmernocken (57) umschließt und daß der Kolben (63) stirnseitig an den Mitnehmernocken (57) anlegbar ist.

2. Anhängerkupplung nach Anspruch 1, **dadurch gekennzeichnet, daß** der Kolben (63) stirnseitig mit einer Ausnehmung (64) versehen ist, und daß der Mitnehmernocken (51) in die Ausnehmung (64) greift.

3. Anhängerkupplung nach Anspruch 2, **dadurch gekennzeichnet, daß** die Ausnehmung (64) eine radiale Anlagefläche (68) aufweist, und daß der Mitnehmernocken (57) mit einem balligen Abschnitt (56) an der Anlagefläche (68) anliegt.

4. Anhängerkupplung nach einem oder mehreren der Ansprüche 1 bis 3, **dadurch gekennzeichnet, daß** die Rückstellfeder (66) parallel zur Achse (60) des Kolbens (63) angeordnet ist.

5. Anhängerkupplung mit einem Kupplungsmaul (15), einem durch das Kupplungsmaul (15) hindurch verfahrbaren Kupplungsbolzen (25) zum Verriegeln einer in das Kupplungsmaul (15) eingesteckten Zugöse (16) und mit einer Betätigungsvorrichtung (29) für das Verfahren des Kupplungsbolzens (25), wobei die Betätigungsvorrichtung (29) einen fluidisch betriebenen Drehantrieb (69) umfaßt, dessen Drehbewegung aus einer Ausgangsstellung heraus in eine Hubbewegung des Kupplungsbolzens (25) zum Lösen der Anhängerkupplung (10) umsetzber ist und der Kupplungsbolzen (25) in der Lösestellung verrastbar ist, wobei ferner die Antriebsverbindung zwischen Kupplungsbolzen (25) und Drehantrieb (69) nach dem Erreichen der Lösestellung des Kupplungsbolzens (25) trennbar ist, derart, daß der Drehantrieb (69) selbsttätig in die Ausgangsstellung zurückkehrt, und wobei schließlich die Drehbewegung des Drehantriebs (69) aus einer fluidisch erzeugten Linearbewegung ableitbar ist wird, die die Bewegung eines Kolbens (91) ist, **dadurch gekennzeichnet, daß** in den Kraftfluß der Drehbewegung eine Dreh-Mitnahmeverbindung (74 - 78) mit toter Zone geschaltet ist, daß die Dreh-Mitnahmeverbindung (74 - 78) eine in einem drehbaren Mitnehmer (74) drehbar gelagerte Welle (76) umfaßt, daß die Welle (76) einen radial vorstehenden Stein (77) umfaßt, und daß der Stein (77) in einer auf einen Teil des Umfanges des Mitnehmers (74) begrenzten Aussparung (78) verdrehbar ist, und daß die Linearbewegung des Kolbens (91) gegen eine Rückstellfeder (79a) abgestützt ist.

6. Anhängerkupplung nach Anspruch 5, **dadurch gekennzeichnet, daß** der Teil des Umfanges einem Verdrehwinkel der Welle (76) relativ zum Mitnehmer (74) von zwischen 60° und 90°, vorzugsweise von etwa 75° entspricht.

7. Anhängerkupplung nach Anspruch 5 oder 6, **dadurch gekennzeichnet, daß** der Kolben (91) mit einer Zahnstange (92) versehen ist, und daß die Zahnstange (92) mit einem auf einer Welle (76a) sitzenden Ritzel (93) kämmt.

8. Anhängerkupplung nach Anspruch 5 oder 6, **dadurch gekennzeichnet, daß** der Kolben (97) an ein Ende (99) einer Gelenkstange (100) angelenkt ist, dessen anderes Ende (101) an das freie Ende einer auf einer Welle (76b) sitzenden Kurbel (102) angelenkt ist.

9. Anhängerkupplung nach einem oder mehreren der Ansprüche 5 bis 8, **dadurch gekennzeichnet, daß** die Drehbewegung der Welle (76) gegen eine Rückstellfeder (79) abgestützt ist.

## Claims

1. A trailer coupling comprising a coupling mouth (15), a coupling bolt (25) adapted for being displaced through the coupling mouth (15) for latching a towing lug (16) inserted into the coupling mouth (14), and an actuator assembly (29) for displacing the coupling bolt (25), the actuator assembly (29) having a fluid-operated rotary drive (30) within which a linear displacement of a piston (63) may be converted into a rotary movement of a shaft (52), the rotary movement of which may be converted into a lifting movement of the coupling bolt (25) for opening the trailer coupling (10), the coupling bolt (25) being adapted to be latched in the open position, wherein, further, a driving connection between the piston (63) and the shaft (52) is adapted to be disconnected after the open position of the coupling bolt (25) has been assumed, such that the piston (63) automatically returns into its initial position, and wherein, further, the rotary drive (30) comprises a housing (40) having a bore (51) for receiving the shaft (52) to run therein, an annular cavity (58) surrounding the bore (51), and a cylindrical bore (61) being arranged essentially at right angles with respect to the bore (51) and intersecting the annular cavity (58), the piston (63) running within the cylindrical bore (61), and a return spring (66) being provided for the piston (63), **characterized in that** the annular cavity (58) encloses a catch cam (57) fixedly seated on the shaft (52), the piston (63) being adapted to be applied against the catch cam (57) an a front surface.

2. The trailer coupling of claim 1, **characterized in that** the piston (63) has a recess (64) on its front surface, the catch cam (51) engaging the piston (63) at the recess (64).

3. The trailer coupling of claim 2, **characterized in that** the recess (64) has a radial contact surface (68), the catch cam (57) being applied against the contact surface (68) with a crowned section (56).

4. The trailer coupling of one or more of claims 1 to 3, **characterized in that** the return spring (66) is arranged parallel to the axis (60) of the piston (63).

5. A trailer coupling comprising a coupling mouth (15), a coupling bolt (25) adapted for being displaced through the coupling mouth (15) for latching a towing lug (16) inserted into the coupling mouth (14), and an actuator assembly (29) for displacing the coupling bolt (25), the actuator assembly (29) having a fluid-operated rotary drive (69), the rotary movement of which may be converted from an initial position on into a lifting movement of the coupling bolt (25) for opening the trailer coupling (10), the coupling bolt (25) being adapted to be latched in the open position, wherein, further, a driving connection between the coupling bolt (25) and the rotary drive (69) is adapted to be disconnected after the open position of the coupling bolt (25) has been assumed, such that the rotary drive (69) automatically returns into its initial position, and wherein, finally, the rotary movement of the rotary drive (69) may be derived from a fluidically generated linear movement, namely the movement of a piston (91), **characterized in that** a rotary-catch connection (74 - 78) with a dead zone is disposed within the flow of force of the rotary movement, that the rotary-catch connection (74 - 78) comprises a shaft (76) rotatably journalled within a rotatable catch member (74), that the shaft (76) has a radially protruding block (77), and that the block (77) is arranged rotatably within a recess (78), the recess (78) extending over a limited portion of the periphery of the catch member (74), the linear movement of the piston (91) being supported against a return spring (79a).

6. The trailer coupling of claim 5, **characterized in that** the portion of the periphery corresponds to an angle of rotation of the shaft (76) of between 60° and 90°, preferably of about 75° relative to the catch member (74).

7. The trailer coupling of claim 5 or 6, **characterized in that** the piston (91) is provided with a rack (92), the rack (92) meshing with a pinion (93) seated on a shaft (76a).

8. The trailer coupling of claim 5 or 6, **characterized in that** the piston (97) is linked to one end (99) of a toggle link (100), the other end (101) of which being linked to the free end of a crank (102) seated on a shaft (76b).

9. The trailer coupling of one or more of claims 5 to 8, **characterized in that** the rotary movement of the shaft (76) is supported against a return spring (79).

## Revendications

1. Accouplement de remorque avec une bouche d'accouplement (15), un goujon d'accouplement (25) mobile à travers la bouche d'accouplement (15) pour verrouiller un oeillet de traction (16) enfoncé dans la bouche d'accouplement et avec un dispositif de manoeuvre (29) pour le déplacement du goujon d'accouplement (25), le dispositif de manoeuvre (29) comprenant un entraînement rotatif (30) actionné par un fluide, dans lequel un mouvement rectiligne d'un piston (63) peut être transformé en un mouvement de rotation d'un arbre (52) dont le mouvement de rotation peut être transformé en un mouvement de course du goujon d'accouplement (25) afin de libérer l'accouplement de remorque (10), le goujon d'accouplement (25) pouvant être encliqueté dans la position de libération, et la liaison d'entraînement entre le piston (63) et l'arbre (52) pouvant de plus être séparée quand on atteint la position de libération du goujon d'accouplement (25), de telle manière que le piston (63) revient automatiquement dans sa position de départ, et de plus, l'entraînement rotatif (30) comprend un boîtier (40) avec un perçage (51) dans lequel passe l'arbre (52), et une chambre annulaire (58) entoure le perçage (51), et un perçage cylindrique (61) est placé pour l'essentiel perpendiculairement au perçage (51) et coupe la chambre annulaire (58), et le piston (63) passe de plus dans le perçage cylindrique (61) et un ressort de rappel (66) est prévu pour le piston (63), **caractérisé en ce que** la chambre annulaire (58) entoure une came d'entraîneur (57) montée fixe sur l'arbre (52) et **en ce que** le piston (63) peut s'appuyer du côté frontal contre la came d'entraîneur (57).

2. Accouplement de remorque selon la revendication 1, **caractérisé en ce que** le piston (63) est muni du côté frontal d'un évidement (64) et **en ce que** la came d'entraîneur (51) s'engage dans l'évidement (64).

3. Accouplement de remorque selon la revendication 2, **caractérisé en ce que** l'évidement (64) présente une surface d'appui radiale (68) et **en ce que** la came d'entraîneur (57) s'appuie contre la surface d'appui (68) avec une section bombée (56).

4. Accouplement de remorque selon une ou plusieurs des revendications 1 à 3, **caractérisé en ce que** le ressort de rappel (66) est placé parallèlement à l'axe (60) du piston (63).

5. Accouplement de remorque avec une bouche d'accouplement (15), un goujon d'accouplement (25) mobile à travers la bouche d'accouplement (15) pour verrouiller un oeillet de traction (16) enfoncé dans la bouche d'accouplement et avec un dispositif de manoeuvre (29) pour le déplacement du goujon d'accouplement (25), le dispositif de manoeuvre (29) comprenant un entraînement rotatif (69) actionné par un fluide, dont le mouvement de rotation depuis une position de départ peut être transformé en un mouvement de course du goujon d'accouplement (25) afin de libérer l'accouplement de remorque (10), et le goujon d'accouplement (25) peut être enclenché dans la position de libération, la liaison d'entraînement entre le goujon d'accouplement (25) et l'entraînement rotatif (69) pouvant de plus être séparée quand on atteint la position de libération du goujon d'accouplement (25), de telle manière que l'entraînement rotatif (69) revient automatiquement dans la position de départ et, enfin, le mouvement de rotation de l'entraînement rotatif (69) pouvant être déduit d'un mouvement rectiligne produit par un fluide, qui est le mouvement d'un piston (91), **caractérisé en ce qu'**une liaison d'entraînement rotatif (74 - 78) avec une zone morte est interposée sur la trajectoire de force du mouvement rotatif, **en ce que** la liaison d'entraînement rotatif (74 - 78) comprend un arbre (76) monté rotatif dans un entraîneur rotatif (74), **en ce que** l'arbre (76) comprend un coulisseau (77) en saillie radiale, et **en ce que** le coulisseau (77) peut toumer dans un évidement (78) limité sur une partie de la circonférence de l'entraîneur (74), et **en ce que** le mouvement rectiligne du piston (91) est soutenu contre un ressort de rappel (79a).

6. Accouplement de remorque selon la revendication 5, **caractérisé en ce que** la partie de la circonférence correspond à un angle de rotation de l'arbre (76) par rapport à l'entraîneur (74) compris entre 60° et 90°, de préférence d'environ 75°.

7. Accouplement de remorque selon la revendication 5 ou 6, **caractérisé en ce que** le piston (91) est muni d'une crémaillère (92) avec un pignon (93) monté sur un arbre (76a).

8. Accouplement de remorque selon la revendication 5 ou 6, **caractérisé en ce que** le piston (97) est articulé sur une extrémité (99) d'une bielle (100) dont l'autre extrémité (101) est articulée sur l'extrémité libre d'une manivelle (102) montée sur un arbre (76b).

9. Accouplement de remorque selon une ou plusieurs des revendications 5 à 8, **caractérisé en ce que** le mouvement de rotation de l'arbre (76) est soutenu contre un ressort de rappel (79).
